**Europäisches Patentamt**

**European Patent Office**

**Office européen des brevets**

(19)

(11) Veröffentlichungsnummer: **0 675 591 A1**

## (12) EUROPÄISCHE PATENTANMELDUNG

(21) Anmeldenummer: **95103099.8**

(22) Anmeldetag: **04.03.95**

(51) Int. Cl.6: **H02P 21/00**, H02P 6/00

(30) Priorität: **30.03.94 DE 4411073**

(43) Veröffentlichungstag der Anmeldung:
**04.10.95 Patentblatt 95/40**

(84) Benannte Vertragsstaaten:
**BE DE FR GB**

(71) Anmelder: **Bodenseewerk Gerätetechnik GmbH**
**Alte Nussdorfer Strasse 15**
**Postfach 1120**
**D-88662 Überlingen (DE)**

(72) Erfinder: **Schulz, Hartmut**
**Jodok Strasse 16**
**D-88641 Überlingen (DE)**

(74) Vertreter: **Wolgast, Rudolf, Dipl.-Chem. Dr. et al**
**Dipl.-Phys. Jürgen Weisse**
**Dipl.-Chem. Dr. Rudolf Wolgast**
**Bökenbusch 41**
**Postfach 11 03 86**
**D-42531 Velbert (DE)**

(54) **Schaltungsanordnung zur Ansteuerung eines bürstenlosen Gleichstrommotors.**

(57) Zur Ansteuerung eines bürstenlosen Gleichstrommotors (10) mit einem Stator (12), der drei um 120° gegeneinander versetzte Statorwicklungen (14,16,18) aufweist, und einem radial magnetisierten Rotor (20) sind mit Hilfe eines Mikrorechners realisierte erste und zweite Regler (36,38) vorgesehen, auf deren Eingänge die Differenzen je eines Stromsollwertes und eines Stromistwertes für die in Richtung der Magnetisierung und quer zur Richtung der Magnetisierung in virtuellen, orthogonalen Spulen fließenden virtuellen Ströme aufgeschaltet sind und welche zugeordnete Regler-Ausgangssignale bilden. Ein Drehwinkelgeber (44) liefert die Winkelstellung des Rotors (20) des Gleichstrommotors (10). Es sind Spannungs-Transformationsmittel (46) zur Durchführung einer Spannungs-Transformation zur Umsetzung der Regler-Ausgangssignale in Spannungswerte für die Erzeugung eines Drehfeldes im Stator (12) des Gleichstrommotors vorgesehen mit einem Speicher (64), auf welchen aus Regler-Ausgangssignalen und Winkelstellungs-Informationen gebildete Adressen aufgeschaltet sind und in welchem unter diesen Adressen digitale Funktionwerte abgelegt sind. Aus diesen Funktionswerten werden drei Ausgangsspannungen erzeugt, durch welche drei um 120° winkelversetzte Statorwicklungen (14,16,18) zur Erzeugung eines Drehfeldes ansteuerbar sind. Die Spannungs-Transformationsmittel liefern digitale Werte, welche die drei Ausgangsspannungen wiedergeben. Jeweils einer der digitalen Werte ist auf einen von drei Pulsbreitenmodulatoren aufschaltbar ist, welche Pulsfolgen vorgegebener Frequenz liefern, deren Pulsbreiten jeweils dem aufgeschalteten Wert der Ausgangsspannung proportional ist. Die Spannungs-Transformationsmittel (46) weisen eine Daten-Port (86) auf, an welchem von den Funktionswerten abgeleitete, digitale Werte ausgegeben werden, die statorbezogenen orthogonalen Spannungswerten ($U_x$, $U_y$) an virtuellen Spulen (28,30) entsprechen. Die statorbezogenen, orthogonalen Spannungswerte ($U_x$, $U_y$) sind auf Spannungsumsetzmittel (88,90,92,94) aufgeschaltet zum Umsetzen dieser Spannungswerte in die drei Werte der Ausgangsspannungen ($U^*_R$, $U^*_S$, $U^*_T$).

EP 0 675 591 A1

Fig. 3

Die Erfindung betrifft eine Schaltungsanordnung zur Ansteuerung eines bürstenlosen Gleichstrommotors mit einem radial magnetisierten Rotor, enthaltend:

(a) einen mit Hilfe eines Mikrorechners realisierten ersten und zweiten Regler, auf deren Eingänge die Differenzen je eines Stromsollwertes und eines Stromistwertes für die in Richtung der Magnetisierung und quer zur Richtung der Magnetisierung in virtuellen, orthogonalen Spulen fließenden virtuellen Ströme aufgeschaltet sind und welche zugeordnete Regler-Ausgangssignale bilden,

(b) einen Drehwinkelgeber, der eine Winkelstellungs-Information über die Winkelstellung des Rotors des Gleichstrommotors liefert,

(c) Spannungs-Transformationsmittel zur Durchführung einer Spannungs-Transformation zur Umsetzung der Regler-Ausgangssignale in Spannungswerte für die Erzeugung eines Drehfeldes im Stator des Gleichstrommotors, mit einem Speicher, auf welchen aus Regler-Ausgangssignalen und Winkelstellungs-Informationen gebildete Adressen aufgeschaltet sind und in welchem unter diesen Adressen digitale Funktionwerte abgelegt sind, und mit Mitteln zur Erzeugung von drei Ausgangsspannungen aus diesen Funktionswerten, durch welche drei um 120° winkelversetzte Statorwicklungen zur Erzeugung eines Drehfeldes ansteuerbar sind.

Eine solche Schaltungsanordnung ist bekannt durch einen Aufsatz von B. Robyns, "Commande numerique des moteurs synchrone at asynchrone".

Der Motor weist bei dieser Anordnung einen radial magnetisierten Rotor auf. Der Stator enthält drei um 120° gegeneinander winkelversetzte Statorwicklungen in Sternschaltung. Der Motor weist ferner einen Winkelgeber auf, der in digitaler Form die Winkelstellung des Rotors angibt. Aus einer Gleichspannung werden in den drei Statorwicklungen Ströme erzeugt, die ein umlaufendes Drehfeld erzeugen und einen entsprechenden Umlauf des Rotors hervorrufen. Dabei ist die Drehzahl dieses Drehfeldes und damit des Motors in Abhängigkeit von Führungsgrößen veranderbar.

Die Schaltungsanordnung enthält zwei Regler, an deren Eingängen die Differenzen je einer Führungsgröße und eines Istwertes gebildet werden. Führungsgrößen und Istwerte entsprechen virtuellen Strömen, durch welche ein mit dem Rotor des Motors umlaufendes Magnetfeld erzeugt wird in einem rotorfesten System, wobei einer der Ströme eine Magnetfeldkomponente in Richtung der Magnetisierung des Rotors und der andere der Ströme eine Magnetfeldkomponente senkrecht zur Richtung der Magnetisierung erzeugt. In der Praxis ist die erstere Führungsgröße konstant null. Die Reglerausgangssignale liegen an einer Entkopplungsschaltung. Die Entkopplungsschaltung liefert zwei entsprechende Spannungswerte. Diese beiden Spannungswerte werden einer Spannungs-Transformation unterworfen. Diese Spannungs-Transformation transformiert die beiden Spannungskomponenten in die drei Spannungen, welche an die drei Wicklungen des Stators des Motors anzulegen sind. Die Spannungs-Transformation hat in Matrixschreibweise folgende Form:

$$\begin{vmatrix} X_a \\ X_b \\ X_c \end{vmatrix} = \sqrt{\frac{2}{3}} \begin{vmatrix} \cos\theta & -\sin\theta \\ \cos(\theta - 2\pi/3) & -\sin(\theta - 2\pi/3) \\ \cos(\theta - 4\pi/3) & -\sin(\theta - 4\pi/3) \end{vmatrix} \begin{vmatrix} X_d \\ X_q \end{vmatrix}$$

Auf die entsprechenden Transformationsmittel sind die Winkelstellungs-Informationen von dem am Motor sitzenden Winkelgeber aufgeschaltet. Die so erhaltenen drei Spannungen sind auf einen gesteuerten Stromrichter geschaltet, der entsprechende Ströme in den drei Wicklungen des Stators erzeugt. Von den drei Strömen werden zwei Ströme gemessen. Bei der Sternschaltung ist der dritte Strom durch diese beiden Ströme bestimmt und braucht daher nicht zusätzlich gemessen zu werden. Diese Ströme werden einer Strom-Transformation unterworfen. Die Strom-Transformation transformiert die das umlaufende Magnetfeld erzeugenden Ströme in gleichwirkende Ströme, wie sie in einem mit dem Rotor umlaufenden Spulensystem von zwei zueinander senkrechten Spulen zur Erzeugung des gleichen umlaufenden Magnetfeldes fließen müßten. Dabei erzeugt wieder eine dieser virtuellen Spulen eine Magnetfeld-Komponente in Richtung der Magnetisierung des Rotors und die andere virtuelle Spule erzeugt ein Magnetfeld senkrecht zu dieser Richtung. Die Transformationsmittel für diese Strom-Transformation erhalten ebenfalls die Winkelstellungs-Informationen von dem am Motor sitzenden Winkelgeber. Die Strom-Transformation hat in Matrixschreibweise folgende Form

$$\begin{vmatrix} U_d \\ \\ U_q \end{vmatrix} = \begin{vmatrix} R_a+L_d s & -L_q \omega \\ \\ L_d \omega & R_a+L_q s \end{vmatrix} \begin{vmatrix} i_d \\ \\ i_q \end{vmatrix} + \begin{vmatrix} 0 \\ \\ K_T \omega \end{vmatrix}$$

$$T_{EM} = K_T i_q + (L_d - L_q) i_d i_q$$

wobei

$R_a$ den Widerstand in den induzierten Phasen,

$L_d$ die Induktion in der Achse "d", d.h. parallel zur Magnetisierung des Rotors,

$L_q$ die Induktion in der Achse "q", d.h. quer zu der Magnetisierung des Rotors,

w die Drehgeschwindigkeit des Rotors,

$\theta$ die Winkelstellung des Rotors,

$K_T$ den Koeffizienten der EMK und

s den Laplace-Operator bezeichnet.

Die Strom-Transformation liefert somit die Stromistwerte für die beiden vorerwähnten Regler.

Die Durchführung der beiden Transformationen erfolgt üblicherweise mittels eines Speichers, in denen die transformierten Größen abgelegt sind, wobei die beiden Eingangsgrößen und die Position des Rotors gemeinsam jeweils die zugehörigen Adressen bilden. Das erfordert eine sehr hohe Speicherkapazität. Eine solche hohe Speicherkapazität ist für viele Anwendungen zu aufwendig und nicht tragbar.

Durch eine Veröffentlichung von Lessmeier u.a.: "Microprocessor-Controlled AC-Servo Drives with Synchronous or Induction Motors: Which is Preferable?" in IEEE Transactions on Industrial Applications, Bd. IA-22, No. (1986), S.812-819 ist eine Schaltungsanordnung zur Steuerung eines bürstenlosen Gleichstrommotors mit radial magnetisiertem Rotor mittels eines Mikrorechners bekannt. Dabei wird mittels des Mikrorechners ein erster und ein zweiter Regler realisiert, auf deren Eingänge die Differenz je eines Stromsollwertes und eines Stromistwertes für die in Richtung der Magnetisierung und quer zur Richtung der Magnetisierung fließenden virtuellen Ströme aufgeschaltet sind. Die Regler liefern zugeordnete Regler-Ausgangssignale. Ein Drehwinkelgeber liefert eine Winkelstellungs-Information über die Winkelstellung des Rotors des Motors. Es werden zwei Ströme in den Wicklungen des Motors gemessen. Transformationsmittel führen eine Spannungs-Transformation zur Umsetzung der Regler-Ausgangssignale in statorbezogene, orthogonale Spannungswerte für die Erzeugung eines Drehfeldes im Stator des Gleichstrommotors durch. Strom-Transformationsmittelsetzen die Ströme in den Wicklungen in die Stromistwerte um.

Eine ähnliche Anordnung ist beschrieben in einem Aufsatz von Naunin u.a.: "Synchronous Servo Drive: A Compact Solution of Control Problems by Means of a Single-Chip Microcomputer" in "IEEE Transactions on Industrial Applications" Bd. 26 (1990), No.3, S 408-414.

Der Erfindung liegt die Aufgabe zugrunde, bei einer Schaltungsanordnung der eingangs genannten Art die in den Statorwicklungen fließenden analogen Ströme auf vorteilhafte Weise den Erfordernissen entsprechend zu erzeugen.

Der Erfindung liegt insbesondere die Aufgabe zugrunde, die Schaltungsanordnung so zu gestalten, daß sie durch ein FRGA (Field Programmable Gate Array) oder ein ASIC (Application Specific Integrated Circuit) realisierbar ist.

Erfindungsgemäß wird diese Aufgabe dadurch gelöst, daß

(d) die Spannungs-Transformationsmittel digitale Werte liefern, welche die drei Ausgangsspannungen wiedergeben,

(e) jeweils einer der digitalen Werte auf einen von drei Pulsbreitenmodulatoren aufschaltbar ist, welche Pulsfolgen vorgegebener Frequenz liefern, deren Pulsbreiten jeweils dem aufgeschalteten Wert der Ausgangsspannung proportional ist.

Dabei können die Spannungs-Transformationsmittel einen Daten-Port aufweisen, an welchem von den Funktionswerten abgeleitete, digitale Werte ausgegeben werden, die statorbezogenen orthogonalen Spannungswerten an virtuellen Spulen entsprechen, und die statorbezogenen, orthogonalen Spannungswerte können wiederum auf Spannungsumsetzmittel aufgeschaltet sein zum Umsetzen dieser Spannungswerte in die drei Werte der Ausgangsspannungen, durch welche die drei um 120° winkelversetzte Statorwicklungen zur Erzeugung eines Drehfeldes ansteuerbar sind.

Dabei werden zunächst die rotorbezogenen Reglerausgangssignale durch eine von der Winkelstellung des Rotors abhängige Transformation in statorbezogene, orthogonale Spannungen transformiert, die an virtuelle orthogonale Spulen anzulegen wären. Diese Transformation kann in üblicher Weise mittels eines Speichers erfolgen, auf den aus Winkelstellungs-Information und Regler-Ausgangssignalen zusammengesetzte Adressen aufgeschaltet sind. Die so erhaltenen zwei Werte werden dann durch eine weitere, von der Winkelstellung des Rotors unabhängige Spannungsumsetzmittel in die Werte der auf die drei Statorwicklungen aufzuschaltenden Spannungen durch Linearkombination umgesetzt. Die Koeffizienten dieser Linearkombination sind unabhängig von der Winkelstellung des Rotors und nur abhängig von der relativen Winkellage der "virtuellen" Spulen und der Statorwicklungen.

Die Spannungsumsetzmittel können eine arithmetische Logikeinheit (ALU) zur digitalen Berechnung der drei Werte der Ausgangsspannungen als Linearkombination der statorbezogenen, orthogonalen Spannungswerte enthalten. Vorteilhaft ist es, wenn die arithmetische Logikeinheit ein als Schieberegister ausgebildetes Operanden-Register, einen Addierer und einen Akkumulator aufweist, wobei in jedem Takt der Inhalt des Operanden-Registers durch den Addierer zum Inhalt des Akkumulators addiert und die Summe als neuer Wert in den Akkumulator eingeschrieben wird, ein in das Operanden-Register eingeschriebener Operand einer Verschiebeoperation in dem Operanden-Register unterworfen wird und nacheinander die Werte der beiden statorbezogenen, orthogonalen Spannungen auf das Operanden-Register aufgeschaltet sind und die Einlesung der Werte der statorbezogenen, orthogonalen Spannungen in das Operanden-Register und die Verschiebeoperation durch die Ablaufsteuerung nach Maßgabe der relativen Winkellage der virtuellen, orthogonalen Spulen und der Statorwicklungen derart steuerbar sind, daß in dem Akkumulator digitale Werte entsprechend den auf die Statorwicklungen aufzuschaltenden Ausgangsspannungen zur Aufschaltung auf die Pulsbreitenmodulatoren gebildet werden.

Ein Ausführungsbeispiel der Erfindung ist nachstehend unter Bezugnahme auf die zugehörigen Zeichnungen näher erläutert.

Fig.1    ist ein Blockschaltbild und zeigt das -an sich bekannte-Grundprinzip der Regelung eines bürstenlosen Gleichstrommotors.

Fig.2    zeigt den radial magnetisierten Rotor und veranschaulicht die Bedeutung der Führungsgrößen bei der Schaltungsanordnung von Fig.1.

Fig.3    zeigt als Blockschaltbild die Transformationsmittel zur Durchführung der Spannungs-Transformation und der Strom-Transformation.

Fig.4    zeigt Einzelheiten der digitalen Signalverarbeitung bei den Transformationsmitteln von Fig.2.

Fig.5    zeigt eine bei der Schaltungsanordnung benutzte arithmetische Logikeinheit (ALU).

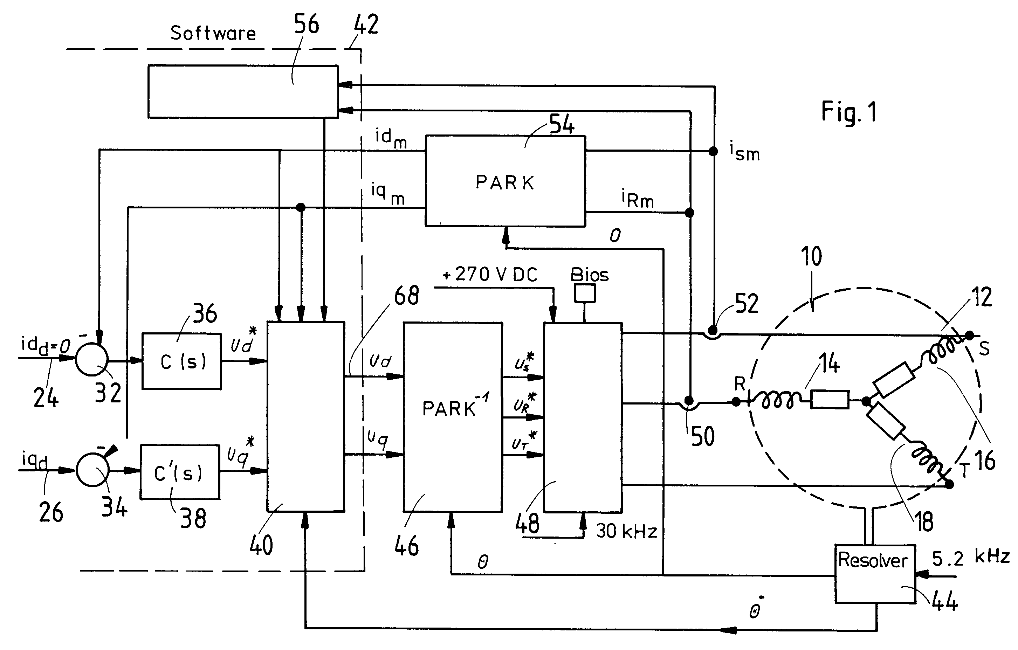

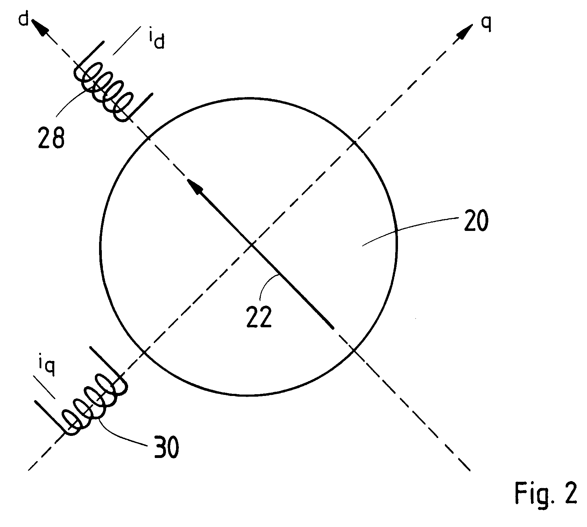

In Fig.1 ist mit 10 ein zu regelnder, bürstenloser Gleichstrommotor bezeichnet. Der Gleichstrommotor 10 weist einen Stator 12 mit drei um 120° gegeneinander winkelversetzten Wicklungen 14, 16 und 18 auf. Jede der Wicklungen 14, 16 und 18 ist in Fig.1 durch eine Induktivität und einen ohmschen Widerstand dargestellt. Der Gleichstrommotor 10 weist weiterhin einen Rotor 20 (Fig.2) auf. Der Rotor 20 ist radial magnetisiert, was in Fig.2 durch einen Pfeil 22 dargestellt ist.

An Eingängen 24 und 26 liegen Führungsgrößen $i_{dd}$ und $i_{qd}$. Die Führungsgrößen repräsentieren die Sollwerte von Strömen in zwei virtuellen Spulen 28 und 30 (Fig.2), die mit dem Rotor 20 umlaufen und Komponenten eines ebenfalls umlaufenden Magnetfeldes erzeugen. Diesem umlaufenden Magnetfeld soll dasjenige Magnetfeld entsprechen, das von den Strömen in den Wicklungen 14, 16 und 18 des Stators 12 erzeugt wird. In der Praxis ist der Stromsollwert $i_{dd}$ = 0. Die Führungsgrößen 24 und 26 sind auf Summierpunkte 32 bzw. 34 aufgeschaltet. An den Summierpunkten 32 und 34 liegen außerdem die indirekt gemessenen Stromistwerte $i_{dm}$ bzw. $i_{qm}$ der Ströme in den virtuellen Spulen 28 bzw. 30. Die in den Summierpunkten gebildeten Differenzen liegen an Reglern 36 bzw. 38. Die Regler 36 und 38 liefern Reglerausgangsgrößen $U_d^*$ bzw. $U_d^*$. Diese Reglerausgangsgrößen sind auf eine Entkopplungsschaltung 40 geschaltet, welche eine Entkopplung der d- und q-Achsen vornimmt. Die Entkopplungsschaltung 40 liefert entkoppelte Reglerausgangsgrößen $U_d$ und $U_q$. Die bisher beschriebene Signalverarbeitung erfolgt durch geeignete Software in einem Mikrorechner. Das ist durch die gestrichelte Umrandung 42 in Fig.1 dargestellt.

Mit dem Rotor 20 des Motors 10 ist ein Winkelgeber 44 verbunden. Der Winkelgeber 44 liefert die Winkelstellungs-Information des Rotors sowie die Drehgeschwindigkeit . Die Drehgeschwindigkeit ist auf die Entkopplungsschaltung 40 aufgeschaltet.

Die Regler-Ausgangssignale $U_d$ und $U_q$ sind auf erste Transformationsmittel 46 geschaltet. Diese ersten Transformationsmittel 46 erhalten auch die Winkelstellungs-Information $\theta$. Die ersten Transformationsmittel 46 führen eine Spannungs-Transformation durch, wie sie oben angegeben ist. Die ersten Transformationsmittel 46 liefern drei Ausgangsspannungen $U_R^*$, $U_S^*$ und $U_T^*$. Diese drei Ausgangsspannungen sind auf gesteuerte Stromrichtermittel 48 geschaltet. Die Stromrichtermittel 48 liefern drei entsprechende Ströme $i_{Rm}$, $i_{Sm}$ und $i_{Tm}$ in den drei Wicklungen 14, 16 und 18 des Stators 12.

Die beiden Ströme $i_{Rm}$ und $i_{Sm}$ werden durch Strommesser 50 bzw. 52 gemessen. Die gemessenen Ströme sind auf zweite Transformationsmittel 54 geschaltet und werden einer Strom-Transformation der oben angegebenen Art unterworfen. Die zweiten Transformationsmittel 54 liefern die virtuellen Stromistwerte $i_{dm}$ und $i_{qm}$, die auf die Summierpunkte 32 bzw. 34 am Eingang der Regler 36 bzw. 38 aufgeschaltet sind.

Die Strommeßwerte $i_{Rm}$ und $i_{Sm}$ sind außerdem auf eine Schutzschaltung 56 zum Schutz der Leistungsverstärker aufgeschaltet. Die Schutzschaltung 56 steuert die Entkopplungsschaltung 40. Außerdem ist die Entkopplungsschaltung 40 von den Stromistwerten $i_{dm}$ und $i_{qm}$ beaufschlagt. Das alles geschieht in Form von Software in dem Mikrorechner.

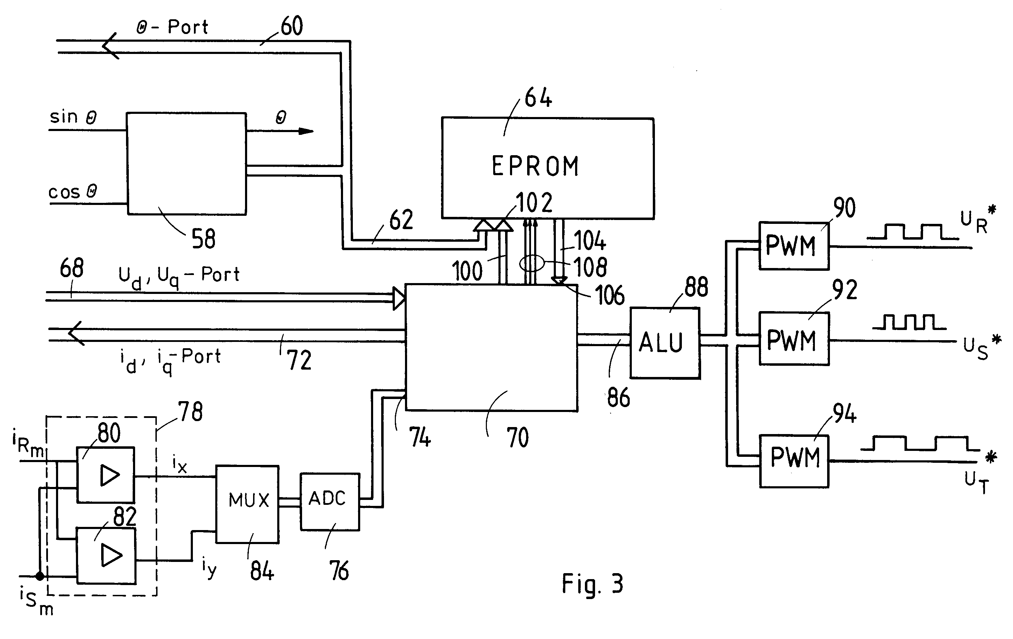

Fig.3 zeigt den Aufbau der ersten und der zweiten Transformationsmittel für die Durchführung der Spannungs-Transformation bzw. der Strom-Transformation.

Der Winkelgeber 44 ist ein Resolver. Der Resolver liefert analog Ausgangssignale, die dem Sinus und dem Kosinus der Winkelstellung $\theta$ proportional sind. In einem Wandler 58 wird aus den analogen Signalen eine digitale Winkelstellungs-Information gebildet. Die digitale Winkelstellungs-Information wird über eine Datenleitung 60 auf einen Winkelstellungs-Port des Mikrorechners gegeben. Über eine Datenleitung 62 wird die Winkelstellungs-Information als Adressenbestandteil auf einen Speicher (EPROM) 64 aufgeschaltet. Der Wandler liefert auch die Drehgeschwindigkeit w.

Die Regler-Ausgangssignale $U_d$ und $U_q$ von der Entkopplungsschaltung 40 liegen an einem Ausgangssignal-Port 68 des Mikrorechners. Diese Regler-Ausgangssignale sind auf eine als Baustein ausgeführte Digitalschaltung 70 aufgeschaltet. Die Digitalschaltung 70 liefert $i_{dm}$- und $i_{dq}$-Werte an einem Stromistwert-Port 72 des Mikrorechners.

Eine Datenleitung 74 verbindet einen Analog-Digital-Wandler 76 mit der Digitalschaltung 70. Die gemessenen Ströme $i_{Rm}$ und $i_{Sm}$ von den Strommessern 50 und 52 liegen an einer analogen Additionsschaltung 78 mit zwei Operationsverstärkern 80 und 82 an, durch welche eine Linearkombination der gemessenen Ströme gebildet wird. Die Linearkombination ist so gewählt, daß zwei Phasen von Ausgangsströmen $i_x$ und $i_y$ erhalten werden, die in zwei zueinander senkrechten, feststehenden, virtuellen Spulen ein Magnetfeld erzeugen, das mit dem durch die drei Wicklungen 14, 16 und 18 des Stators 12 erzeugten Magnetfeld übereinstimmt. Die so erhaltenen Ausgangsströme sind über einen Multiplexer 84 auf den Analog-Digital-Wandler 76 aufschaltbar. Es erfolgt so analog eine Wandlung von drei Phasen auf zwei Phasen. Wie erwähnt, ergibt sich bei der Sternschaltung der Wicklungen 14, 16 und 18 jeweils der dritte Strom aus den beiden anderen, so daß der dritte Strom nicht gemessen zu werden braucht. Tatsächlich repräsentieren aber die Eingänge der Additionsschaltung drei Phasen.

Die Digitalschaltung 70 liefert digitale Daten an einem Daten-Port 86. Die an dem Fort 86 erscheinenden digitalen Werte $U_x$ und $U_y$ entsprechen -ähnlich wie die Ströme $i_x$ und $i_y$-Spannungen, die auf zueinander senkrecht angeordnete, feststehende, virtuelle Spulen aufgeschaltet das gleiche Magnetfeld erzeugen würden wie die Spannungen $U_R^*$ usw. in den Wicklungen 14, 16 und 18 des Stators 12. Diese Werte $U_x$ und $U_y$ sind auf eine arithmetische Logikeinheit (ALU) 88 aufgeschaltet Die Logikeinheit 88 bildet eine Linearkombination der nacheinander an dem Port 88 erscheinenden digitalen Werte. Die Koeffizienten sind so gewählt, daß an einem Ausgangsport der Logikeinheit nacheinander digitale Werte erscheinen, welche den drei an die Wicklungen 14, 16, 18 des Stators 12 anzulegenden Spannungen $U_R^*$, $U_S^*$ und $U_T^*$ entsprechen. Diese digitalen Werte sind auf je einen der Pulsbreitenmodulatoren 90, 92 und 94 geschaltet. Die drei Pulsbreitenmodulatoren liefern an ihren Ausgängen Impulsfolgen mit fester Frequenz, deren Pulsbreite von den digitalen Werten abhängt. Solche Pulsbreitenmodulatoren sind an sich bekannt. Die Pulsbreitenmodulatoren enthalten einen Zähler, der auf den anliegenden Wert gesetzt wird. Durch eine feste Zählimpuls-Frequenz wird der Zähler leergezählt. Der Ausgang des Pulsbreitenmodulators ist logisch eins, solange der Zähler noch nicht durch null gegangen ist. Dieser Vorgang wird zyklisch mit fester Frequenz wiederholt. An den Ausgängen der Pulsbreitenmodulatoren 90, 92 und 94 erscheinen daher Impulsfolgen, deren Pulsbreiten die Komponenten der Spannungen $U_R^*$, $U_S^*$ und $U_T^*$ wiedergeben. Die Impulsfolgen steuern den Stromrichter an. Die Frequenzen der Impulsfolgen sind hoch gegen die Umlauffrequenz des Gleichstrommotors 10. Die Pulsbreiten der Impulsfolgen sind sinusförmig moduliert. Es zeigt sich, daß sich der mit diesen Impulsfolgen angesteuerte Gleichstrommotor so verhält, als wenn er mit Sinusspannungen angesteuert würde.

Die Digitalschaltung 70 ist außerdem über eine Datenleitung 100 mit einem Eingang 102 des Speichers 64 verbunden. Der Speicher 64 ist über eine Datenleitung 104 mit einem Eingang 106 der Digitalschaltung 70 verbunden. Schließlich steht die Digitalschaltung 70 mit dem Speicher 64 noch über Steuerleitungen 108 in Verbindung.

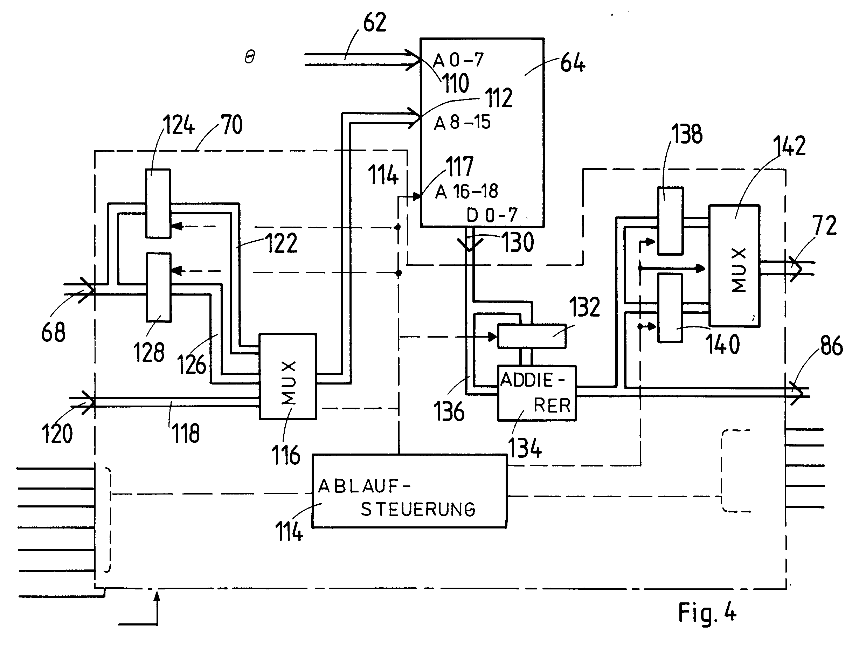

Fig.4 zeigt den Aufbau der Digitalschaltung 70, die in Fig.4 gestrichelt umrandet ist, und den Speicher 64.

Der Speicher 64 hat einen 8-Bit-Adresseneingang 110, der mit der Datenleitung 62 verbunden ist. Die Datenleitung 62 überträgt als einen Adressenbestandteil die Winkelstellungs-Information von dem Wandler 58. Ein weiterer 8-Bit-Adresseneingang 112 erhält einen zweiten Adressenbestandteil über eine Datenleitung 114 von einem Multiplexer 116.

Schließlich liefert die Ablaufsteuerung über Steuerleitungen noch Adressenbestandteile an einem Adresseneingang 117. Der Multiplexer 116 erhält über Datenleitung 118 Daten von einem Port 120, der über die Datenleitung 74 mit dem Analog-Digital-Wandler 76 verbunden ist. Der Multiplexer 116 ist weiterhin über eine Datenleitung 122 mit einem ersten Register 124 und über eine Datenleitung 126 mit einem zweiten Register 128 verbunden. In den Registern 124 und 128 werden von dem Mikrorechner über den Ausgangssignal-Port 68 die Werte von $U_d$ und $U_q$ abgelegt.

Der Speicher 64 liefert an einem Port 130 Funktionsterme, die zu den jeweiligen Adressen gespeichert sind. Es wird jeweils ein Funktionsterm in einem Register 132 zwischengespeichert und mittels eines Addierers 134 zu dem nächsten Funktionsterm addiert, der über eine Datenleitung 136 unmittelbar auf den Addierer 134 aufgeschaltet ist. Der Addierer 134 gibt die Additionsergebnisse nacheinander in Register 138 und 140 ein oder gibt sie auf den Daten-Port 86. Die in den Registern 138 und 140 gespeicherten Datenworte werden über einen Multiplexer 142 nacheinander auf den Stromistwert-Port 72 aufgeschaltet.

Der Ablauf wird von einer Ablaufsteuerung 144 gesteuert.

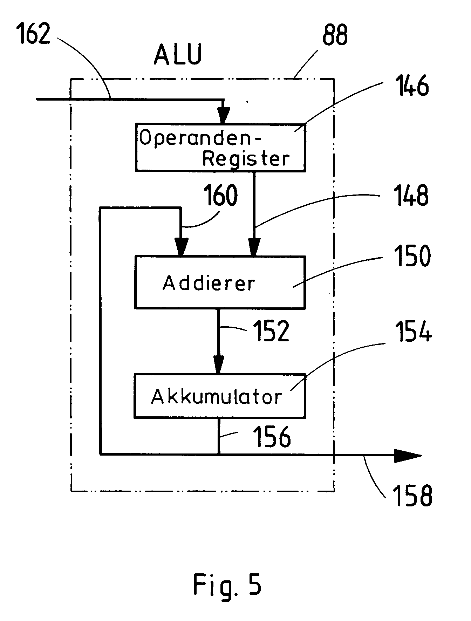

Fig.5 zeigt den Aufbau der arithmetischen Logikeinheit (ALU). Die arithmetische Logikeinheit enthält ein Operanden-Register 146. Das Operanden-Register 146 ist als Schieberegister aufgebaut. Der Inhalt des Operanden-Registers 146 liegt an einem Eingang 148 eines Addierers 150. Der Ausgang 152 des Addierers 150 liegt an einem Akkumulator 154. Der Ausgang 156 des Akkumulators 154 bildet einmal den Ausgang 158 der arithmetischen Logikeinheit 88. Zum anderen ist der Ausgang 156 des Akkumulators 154 mit dem zweiten Eingang 160 des Addierers 150 verbunden. Das Operanden-Register 146 ist über einen Eingang 162 von der Ablauf-Steuerung 114 (Fig.4) steuerbar. Die Ablauf-Steuerung 114 steuert das Operanden-Register 146 so an, daß ein in das Operanden-Register eingelesener Operand in den verschiedenen Takten in dem als Schieberegister ausgebildeten Operanden-Register schrittweise verschoben wird. Der so verschobene Operand wird dann entweder in den Addierer übernommen oder nicht, je nachdem ob die zugeordnete Stelle einer Binärzahl eine logische Eins oder eine logische Null darstellt. Die übernommenen, verschobenen Operanden werden zu dem Inhalt des Akkumulators addiert. Die Summe wieder in den Akkumulator übernommen. Auf diese Weise wird der Operand mit einer Binärzahl multipliziert. Durch Einladen weiterer Operanden in das Operanden-Register und Durchführung einer ähnlichen Operation mit einer anderen Binärzahl kann eine Linearkombination von Operanden gebildet werden. Die Koeffizienten dieser Linearkombination, nämlich die Binärzahlen, sind dabei feste Werte, die nur von den relativen Winkellagen der Wicklungen 14, 16, 18 und der virtuellen Spulen 28, 30 abhängen . Diese Werte können in die Abaufsteuerung einprogrammiert werden.

Die beschriebene Schaltungsanordnung arbeitet wie folgt:

Zur Durchführung der Spannungs-Transformation erhält die Digitalschaltung 70 von dem Ausgangssignal-Port 68 des Mikrorechners seriell die Regler-Ausgangssignale $U_d$ und $U_q$. Diese Regler-Ausgangssignale $U_d$ und $U_q$ werden in die Register 124 und 128 eingeschrieben. Der Multiplexer 116 schaltet nun nacheinander erst das Regler-Ausgangssignal $U_d$ und dann das Regler-Ausgangssignal $U_q$ auf den Adresseneingang 112 des Speichers 64 auf. In dem Speicher wird dadurch eine Adresse angesprochen, die aus der Winkelstellungs-Information und dem Regler-Ausgangsssignal $U_d$ oder dem Regler-Ausgangssignal $U_q$ zusammengesetzt ist. Jeder solchen Adresse ist ein Funktionsterm zugeordnet, der sich aus der Spannungs-Transformation ergibt. Der Funktionsterm, der mit dem Adressenbestandteil $U_d$ ausgelesen wird, wird in dem Register 132 zwischengespeichert und liegt an einem Eingang des Addierers 134. Der Funktionsterm, der mit dem Adressenbestandteil $U_q$ ausgelesen wird, wird dann auf den zweiten Eingang des Addierers gegeben. Der Addierer bildet die Summe. Diese Summe entspricht der oben erwähnten Größe $U_x$. In entsprechender Weise wird durch andere gespeicherte Funktionsterme mit den Adressenbestandteilen $U_d$ und $U_q$ und anderen Adressenbestandteilen an dem mit der Ablaufsteuerung 144 verbundenen Adresseneingang 117 die Größe $U_y$ gebildet. Die so gebildeten digitalen Größen sind auf den Daten-Port 86 aufgeschaltet. In der oben beschriebenen Weise werden daraus von der arithmetischen Logikeinheit 88 und den Pulsbreitenmodulatoren 90, 92 und 94 die drei Pulsbreiten entsprechend $U_R^*$, $U_S^*$ und $U_T^*$ gebildet.

Die "ersten Transformationsmittel" für die Spannungs-Transformation bestimmen somit mittels des Speichers 64 zunächst digital einzelne Funktionsterme. Diese werden addiert. Daraus werden aus den (auf das System des umlaufenden Rotors 20 bezogenen) Regler-Ausgangssignalen $U_d$ und $U_q$ zunächst Größen $U_x$ und $U_y$ gebildet, die auf ein feststehendes System bezogen, orthogonalen Magnetfeld-Komponenten entsprechen. Diese Größen werden in analoge Signale umgesetzt. Die Transformation in drei Phasen erfolgt dann durch die arithmetische Logikeinheit 88 und die Pulsbreitenmodulatoren 90, 92 und 94, die gleichzeitig eine Digital-Analog-Wandlung vornehmen. Hierdurch läßt sich die Spannungs-Transformation mit geringstmöglichem technischen Aufwand realisieren. Es wird vergleichsweise wenig Speicherkapazität von dem Speicher 64 verlangt. Die "Zwei Phasen zu drei Phasen"-Transformation, die im wesentlichen eine Linearkombination von Größen erfordert, erfolgt mit geringem Aufwand durch gesonderte Mittel.

In ähnlicher Weise wird die Strom-Transformation in der Rückführschleife durchgeführt:

Die aus den gemessenen Strömen $i_{Rm}$ und $i_{Sm}$ analog gebildeten und digitalisierten Größen $i_x$ und $i_y$ liegen an dem Port 120 und werden durch den Multiplexer 116 in einer anderen, durch die Ablaufsteuerung 144 vorgegebenen Phase des Zyklus auf den Adresseneingang 112 des Speichers 64 aufgeschaltet. Auch hier wird wieder mit jeder der Größen $i_x$ und $i_y$ als Adressenbestandteil ein gespeicherter Funktionsterm ausgelesen, der sich aus der Strom-Transformation ergibt. Die Funktionsterme werden durch den Addierer 134 addiert. Daraus ergibt sich einmal $i_{dm}$ und zum anderen mit anderen Funktionstermen bei einem anderen Adressenbestandteil von der Ablaufsteuerung 144 $i_{qm}$. Die beiden so gebildeten Größen $i_{dm}$ und $i_{qm}$ werden in den Registern 138 und 140 zwischengespeichert und durch den Multiplexer 142 an dem Stromistwert-Port 72 ausgegeben und dem Mikrorechner zugeführt.

Auch hier ist die Strom-Transformation aufgeteilt in eine "Drei Phasen zu zwei Phasen"-Transformation, welche durch die Additionsschaltung 78 analog durchgeführt wird, und eine digitale Transformation mittels des Speichers 64. Auch hier ist die digitale Transformation aufgespalten in die Bestimmung von einzelnen Funktionstermen mit den verschiedenen digitalisierten Größen $i_x$ und $i_y$ als Adressenbestandteilen und anschließende Addition. Auch dadurch wird, wie bei der Durchführung der Spannungs-Transformation, der technische Aufwand und insbesondere die erforderliche Speicherkapazität verringert.

**Patentansprüche**

1. Schaltungsanordnung zur Ansteuerung eines bürstenlosen Gleichstrommotors (10) mit einem Stator (12), der drei um 120° gegeneinander versetzte Statorwicklungen (14,16,18) aufweist, und einem radial magnetisierten Rotor (20), enthaltend:

    (a) einen mit Hilfe eines Mikrorechners realisierten ersten und zweiten Regler (36,38), auf deren Eingänge die Differenzen je eines Stromsollwertes und eines Stromistwertes für die in Richtung der Magnetisierung und quer zur Richtung der Magnetisierung in virtuellen, orthogonalen Spulen fließenden virtuellen Ströme aufgeschaltet sind und welche zugeordnete Regler-Ausgangssignale bilden,

    (b) einen Drehwinkelgeber (44), der eine Winkelstellungs-Information über die Winkelstellung des Rotors (20) des Gleichstrommotors (10) liefert,

    (c) Spannungs-Transformationsmittel (46) zur Durchführung einer Spannungs-Transformation zur Umsetzung der Regler-Ausgangssignale in Spannungswerte für die Erzeugung eines Drehfeldes im Stator (12) des Gleichstrommotors (10), mit einem Speicher (64), auf welchen aus Regler-Ausgangssignalen und Winkelstellungs-Informationen gebildete Adressen aufgeschaltet sind und in welchem unter diesen Adressen digitale Funktionwerte abgelegt sind, und mit Mitteln zur Erzeugung von drei Ausgangsspannungen aus diesen Funktionswerten, durch welche die drei um 120° winkelversetzte Statorwicklungen (14,16,18) zur Erzeugung eines Drehfeldes ansteuerbar sind,

    **dadurch gekennzeichnet, daß**

    (d) die Spannungs-Transformationsmittel (46) digitale Werte liefern, welche die drei Ausgangsspannungen wiedergeben,

    (e) jeweils einer der digitalen Werte auf einen von drei Pulsbreitenmodulatoren (90,92,94) aufschaltbar ist, welche Pulsfolgen vorgegebener Frequenz liefern, deren Pulsbreiten jeweils dem aufgeschalteten Wert der Ausgangsspannung proportional ist.

2. Schaltungsanordnung nach Anspruch 1, **dadurch gekennzeichnet, daß**

    (a) die Spannungs-Transformationsmittel (46) einem Daten-Port (86) aufweisen, an welchem von den Funktionswerten abgeleitete, digitale Werte ausgegeben werden, die statorbezogenen orthogonalen Spannungswerten an virtuellen Spulen (28,30) entsprechen, und

    (b) die statorbezogenen, orthogonalen Spannungswerte auf Spannungsumsetzmittel (88, 90,92,94) aufgeschaltet sind zum Umsetzen dieser Spannungswerte in die drei Werte der Ausgangsspannungen, durch welche die drei um 120° winkelversetzten Statorwicklungen (14,16,18) zur Erzeugung eines Drehfeldes ansteuerbar sind.

3. Schaltungsanordnung nach Anspruch 2, **dadurch gekennzeichnet, daß** die Spannungsumsetzmittel eine arithmetische Logikeinheit (ALU 88) zur digitalen Berechnung der drei Werte der Ausgangsspannungen als Linearkombination der statorbezogenen, orthogonalen Spannungswerte enthalten.

4. Schaltungsanordnung nach Anspruch 3, **dadurch gekennzeichnet, daß** die arithmetische Logikeinheit (88) ein als Schieberegister ausgebildetes Operanden-Register (146), einen Addierer (150) und einen Akkumulator (154) aufweist, wobei in jedem Takt

- der Inhalt des Operanden-Registers (146) durch den Addierer (150) zum Inhalt des Akkumulators (154) addiert und die Summe als neuer Wert in den Akkumulator (154) eingeschrieben wird,
- ein in das Operanden-Register (146) eingeschriebener Operand einer Verschiebeoperation in dem Operanden-Register (146) unterworfen wird und
- nacheinander die Werte der beiden statorbezogenen, orthogonalen Spannungen auf das Operanden-Register (146) aufgeschaltet sind und
- die Einlesung der Werte der statorbezogenen, orthogonalen Spannungen in das Operanden-Register (146) und die Verschiebeoperation durch die Ablaufsteuerung (114) nach Maßgabe der relativen Winkellage der virtuellen, orthogonalen Spulen (28,30) und der Statorwicklungen (14,16,18) derart steuerbar sind, daß in dem Akkumulator (154) digitale Werte entsprechend den auf die Statorwicklungen (14,16,18) aufzuschaltenden Ausgangsspannungen zur Aufschaltung auf die Pulsbreitenmodulatoren (90,92,94) gebildet werden.

Fig. 1

Fig. 2

EP 0 675 591 A1

Fig. 3

Fig. 4

EP 0 675 591 A1

Fig. 5

Europäisches
Patentamt

**EUROPÄISCHER RECHERCHENBERICHT**

Nummer der Anmeldung

EP 95 10 3099

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | CONFERENCE RECORD OF THE 1993 IEEE INDUSTRY APPLICATIONS CONFERENCE TWENTY-EIGHTH IAS ANNUAL MEETING, Bd. 1, 3.Oktober 1993 TORONTO, CANADA, Seiten 59-64, XP 000427431 SHIGEO MORIMOTO 'Effects and Compensation of Magnetic Saturation in Permanent Magnet Synchronous Motor Drives' * Seite 59 - Seite 60; Abbildung 1 * --- | 1-4 | H02P21/00 H02P6/00 |
| X | PROCEEDINGS OF THE IECON' 93, Bd. 2, 15.November 1993 MAUI, HAWAÏ, Seiten 1129-1133, XP 000428213 LARS ARNE AGA ET AL. 'Compact control for a PWM-VSI fed Asynchronous motor drive' * Seite 1129 - Seite 1130; Abbildung 3 * --- | 1-4 | |
| A | PROCEEDINGS OF THE THIRD INTERNATIONAL SYMPOSIUM 1991, 1991 AMSTERDAM, NH, NIEDERLANDE, Seiten 203-204, B. ROBYNS ET AL. 'DIGITAL FIELD ORIENTED CONTROL OF A PM SYNCHRONOUS ACTUATOR USING A SIMPLIFIED STRATEGY FOR CONTROLLING THE PARK COMPONENTS OF THE STATOR CURRENTS ' * Seite 203 - Seite 204; Abbildung 3 * --- | 1,2 | **RECHERCHIERTE SACHGEBIETE (Int.Cl.6)** H02P |
| P,A | EP-A-0 601 419 (BODENSEEWERK GERÄTETECHNIK GMBH) 15.Juni 1994 * das ganze Dokument * ----- | 1-4 | |

Der vorliegende Recherchenbericht wurde für alle Patentansprüche erstellt

| Recherchenort | Abschlußdatum der Recherche | Prüfer |
|---|---|---|
| DEN HAAG | 13.Juni 1995 | Bourbon, R |